# EUROPÄISCHE PATENTSCHRIFT

(11) **EP 1 286 747 B1**
(45) Veröffentlichungstag und Bekanntmachung des Hinweises auf die Patenterteilung: **25.02.2004**
(21) Anmeldenummer: 01933870.6
(22) Anmeldetag: 24.04.2001
(51) Int. Cl.: B01D 35/30

(54) **FLÜSSIGKEITSFILTER MIT IN URFORMTECHNIK HERGESTELLTEM GEHÄUSE UND VERFAHREN ZU SEINER HERSTELLUNG**
LIQUID FILTER WITH A HOUSING PRODUCED USING A FORMING TECHNIQUE AND METHOD FOR PRODUCING THE SAME
FILTRE POUR LIQUIDES DOTE D'UN CARTER REALISE SELON LA TECHNIQUE DE TRANSFORMATION PRIMAIRE ET SON PROCEDE DE PRODUCTION

(30) Priorität: 12.05.2000 DE 10023427
(43) Veröffentlichungstag der Anmeldung: 05.03.2003
(73) Patentinhaber: Mann + Hummel GmbH, 71638 Ludwigsburg (DE)
(72) Erfinder: JAINEK, Herbert, 74074 Heilbronn (DE)
(74) Vertreter: Voth, Gerhard, Dipl.-Ing.
(86) Internationale Anmeldenummer: PCT/EP2001/004580
(87) Internationale Veröffentlichungsnummer: WO 2001/085306

(56) Entgegenhaltungen:
- EP-A- 0 657 200
- WO-A-98/40147
- DE-A- 4 240 656
- US-A- 3 358 839
- US-A- 5 549 821
- US-A- 5 667 678

## Beschreibung

### Stand der Technik

Die Erfindung betrifft einen Flüssigkeitsfilter, dessen Gehäuse in Urformtechnik hergestellt wird, mit einem Deckel nach der Gattung des Patentanspruches 1. Außerdem betrifft die Erfindung ein Verfahren zur Herstellung dieses Flüssigkeitsfilter nach der Gattung des Patentanspruches 9.

Die Flüssigkeitsfilter der eingangs genannten Art werden meist mit Gehäusebauteilen von zylindrischer Grundstruktur ausgeführt, wobei der Deckel mit Hilfe eines Schraubgewindes in das Gehäuse eingeschraubt werden kann. Ein solches Flüssigkeitsfilter ist z. B. in der DE 196 37 008 A1 offenbart. Der Schraubdeckel gem. diesem Filterbauteil weist eine radiale Nut auf, in die ein O-Ring zur Dichtung gegenüber dem Gehäusebauteil eingesetzt werden kann. Der Deckel wird mit dem Gehäusebauteil verschraubt und mit einem definierten Drehmoment festgezogen. Damit wird ein Lösen des Deckels während des Betriebs verhindert.

Die beschriebenen Bauteile sind jedoch kostenintensiv in der Herstellung, da das Gewinde hergestellt werden muss. Zumindest in dem Gehäusebauteil, welches meist aus Metall, insbesondere Aluminiumdruckguss, hergestellt ist, kann das Gewinde nicht urformtechnisch ohne Nachbearbeitung hergestellt werden.

Aufgabe der Erfindung ist es daher, ein Flüssigkeitsfilter mit einem Verschluss zwischen Gehäuse und Deckel zu schaffen, welcher kostengünstig in der Herstellung und zuverlässig im Betrieb ist. Diese Aufgabe wird durch die Merkmale des Patentanspruches 1 sowie durch die Merkmale des Patentanspruches 9 gelöst.

### Vorteile der Erfindung

Das erfindungsgemäße Flüssigkeitsfilter besitzt ein Gehäuse, welches in Urformtechnik hergestellt ist. Unter Gehäuse kann neben einem als gesondertes Bauteil ausgeführten Gehäuse auch ein in weitere Strukturen integriertes Gehäuseteil verstanden werden. Dies ist z. B. bei der Anwendung des Filters für das Schmieröl einer Brennkraftmaschine der Fall. Das Gehäuse ist dann in den Motorblock integriert, und durch einen Deckel verschließbar. Dieser ist mit dem Gehäuse dichtend verbindbar, so dass die zu filternde Flüssigkeit nicht aus dem Gehäuse austreten kann. Die Verbindung zwischen Gehäuse und Deckel wird durch eine Drehung des Deckels relativ zum Gehäuse erreicht.

Das Flüssigkeitsfilter ist dadurch gekennzeichnet, dass sowohl am Deckel als auch am Gehäuse Wirkflächen vorgesehen sind, die miteinander in Verbindung stehen, und so die Halterung des Deckels auf dem Gehäuse bewirken. Diese Wirkflächen werden durch Strukturen gebildet, die zumindest für das Gehäuse derart gestaltet sind, dass sie hinterschneidungsfrei bezüglich der Entformungsrichtung von Formteilen für das Gehäuse sind. Dadurch können die Strukturen urformend hergestellt werden, wodurch spahnende Bearbeitungsschritte entfallen können. Insbesondere soll auch eine Nachbearbeitung vermieden werden. Hierdurch lässt sich ein enormes Einsparungspotential in der Fertigung des Gehäuses nutzen. Der Anfall von Spänen kann vollständig verhindert werden, so dass das Gehäusebauteil abschließend auch nicht gereinigt werden muss. Hierdurch lässt sich eine erhöhte Wirtschaftlichkeit der gesamten Filterbaugruppe erreichen. Gleichzeitig lässt sich die Geometrie der Strukturen im Rahmen des Erfordernisses der hinterschneidungsfreien Herstellung frei gestalten, so dass auch dem Sicherheitsaspekt Rechnung getragen werden kann.

Die Wirkflächen im Deckel sind derart angebracht, dass sie mit den Wirkflächen am Gehäuse kommunizieren können. Bei außen angebrachten Wirkflächen am Gehäuse sind diejenigen am Deckel also innen angebracht. Sofern die die Wirkflächen bildenden Strukturen an der Außenseite des Gehäuses angebracht sind, lässt sich dies problemlos mit zwei Formteilen für die Außenkontur des Gehäuses herstellen. Diese bilden je 180° des Gehäuseumfanges ab, wobei im Bereich der Formteilung die Strukturen genau in Entformungsrichtung verlaufen müssen, d. h. senkrecht zur Mittelachse des Gehäuses.

Gemäß einer sinnvollen Ausgestaltung der Erfindung wird zur Abdichtung zwischen Deckel und Gehäuse eine axial wirkende Dichtung verwendet. Dies hat den Vorteil, dass der Wirkungsbereich der Dichtung ebenfalls außerhalb von Gussgraten liegen kann, welche durch den Herstellungsprozess des Gehäuses bedingt sind. Dies begünstigt die Dichtwirkung auch bei der Herstellung des Gehäusebauteils ohne Nachbearbeitung. An das Dichtmaterial müssen lediglich die durchschnittlichen Anforderungen an die Verformbarkeit und Dichtfähigkeit gestellt werden.

Um während des Aufschraubens des Filterdeckels beim Filterwechsel ein Auslaufen von Öl zu vermeiden, kann zusätzlich zur eigentlichen Dichtung ein radial dichtender Abstreifring vorgesehen werden, der zwischen Deckel und Gehäuse zum Einsatz kommt. Insbesondere bei schräg eingebauten Filterpatronen verhindert dieser Abstreifring ein Auslaufen während des Zeitraums, in dem das im Gehäuse befindliche Restöl durch den Ölablauf oder den Auslass im Gehäuse abfließen kann.

Gemäß einer weiteren Ausgestaitung der Erfindung können die Strukturen, die die Wirkflächen bilden, zumindest teilweise senkrecht zur Demontagerichtung des Deckels ausgebildet sein. Bei einem zylindrisch ausgebildetem Gehäuse bedeutet dies gleichzeitig eine senkrechte Ausrichtung bezüglich der Mittelachse des Gehäuses. In diesem senkrechten Bereich wirken somit die Haltekräfte auf die Wirkflächen zwischen Gehäuse und Deckel ebenfalls senkrecht zur Demontagerichtung. Dadurch wird einem ungewolltem Lösen des Deckels wirksam entgegengewirkt. Dies ist ein wesentlicher Vorteil gegenüber herkömmlichen Gewindeverbindungen, welche durch den Betrieb des Filters durch einen als Auftakten bezeichneten Prozess vom Gehäuse gelöst werden können. Dieses Auftakten wird durch einen pulsierenden Druckverlauf der zu filternden Flüssigkeit bewirkt, welcher zu einer abwechselnden Be- und Entlastung der Deckelverbindung führt.

Eine weitere Ausgestaltung der Erfindung sieht vor, dass die Wirkflächen zwischen Deckel und Gehäuse gleichzeitig einen Anschlag bilden, der die Montagebewegung des Deckels begrenzt. Auf diese Weise kann eine definierte Einbaustellung des Deckels gewährleistet werden. Der Anschlag verhindert ein Überdrehen des Deckels und für den Fall, dass wie beschrieben teilweise waagerechte Wirkflächen vorgesehen sind, der Deckel im eingebauten Zustand in diesen Wirkflächenbereich verbleibt.

Vorteilhafterweise können die Wirkflächen weiterhin mit einer Rast- oder Schnappverbindung versehen werden, welche zwischen dem montierten Deckel und dem Gehäuse einrastet. Hierdurch bekommt der Monteur bei der Montage des Deckels eine Rückkoppelung, wann der Deckel montiert ist. Außerdem kann die Schnappverbindung einem Lösen des Deckels entgegenwirken, indem diese der Demontage des Deckels einen Widerstand entgegensetzt. Dieser muss durch den Monteur im Falle eines Wechsels des Filterelementes überwunden werden. Die Rastverbindung kann z. B. durch ein Zig zagprofil aus den Wirkflächen verwirklicht werden, das beim Zuschrauben ineinander greift.

Eine weitere Ausgestaltung der Erfindung sieht vor, dass durch die Strukturen, die die Wirkflächen bilden, eine Zwangsführung des Deckels gewährleistet ist, die eine Drehung um einen Winkel von größer als 180° notwendig macht. Hierdurch ist für den Demontageprozess des Deckels eine größere Zeit notwendig, wodurch das im Gehäuse befindliche Restöl die Zeit findet abzulaufen. Hierdurch kann verhindert werden, dass Restöl beim Filterwechsel in die Umwelt gelangt. Außerdem lässt sich ein weitgehend ölfreies Filterelement durch den Monteur leichter auswechseln. Die Strukturen zur Bildung der Wirkflächen sind vorteilhafterweise gewindeähnlich ausgebildet. Hierdurch wird die Drehbewegung zur Demontage des Deckels erzwungen. Die Strukturen bilden damit Zwischenräume, die Gewindegängen ähnlich sind. In diesen können sich die Strukturen des andern Teils bewegen, wobei nach einer bestimmten Drehung ein Abheben des Deckels in Richtung der Mittelachse des Gehäuses möglich wird.

Ein Verfahren zur Herstellung des beschriebenen Flüssigkeitsfilters sieht vor, dass die Wirkflächen am Gehäuse zur Erzeugung der dichtenden Verbindung des Deckels ausschließlich in Urformtechnik hergestellt werden. Hierdurch werden die bereits beschriebenen Vorteile erzielt. Gemäß einer weiteren Ausgestaltung des Verfahrens können auch die Wirkflächen im Deckel ausschließlich in Urformtechnik hergestellt werden. Dabei ist es besonders vorteilhaft, wenn die Strukturen an der Außenseite des Gehäuses angebracht sind und eine gewindeähnliche Ausgestaltung haben. Diese Strukturen lassen sich gut herstellen, da die Formteile ohne Probleme nach außen hin entternt werden können. Die Strukturen auf der Innenseite des Deckels können durch kurze Stege bzw. Noppen gebildet werden. Diese lassen sich ohne weiteres durch einen Kem herstellen, der zur Entformung um einen gewissen Winkelbetrag gedreht wird. Hierdurch lässt sich auch der Deckel mit wenig verschiedenen Formteilen leicht erzeugen. Alternativ ist ein zerfallender Kern möglich, der Schrittweise aus dem gespritzten Deckel entnommen werden kann. Durch die geometrische Vereinfachung kommt man mit wenig Kemteilen aus!

### Zeichnung

Weitere Einzelheiten der Erfindung werden in den Zeichnungen anhand von schematischen Ausführungsbeispielen beschrieben. Hierbei zeigen
- Figur 1: einen Flüssigkeitsfilter mit Schraubdeckel im Schnitt,
- Figur 2: den Deckel des Flüssigkeitsfilters gem. Figur 1 im Schnitt,
- Figur 3: den Schnitt A-A gem. Figur 2,
- Figur 4: eine perspektivische Ansicht des oberen Teils des Gehäuses gem. Figur 1 und
- Figur 5: die Abwicklung der Oberfläche des Gehäusemantels gem. Figur 4.

### Beschreibung der Ausführungsbeispiele

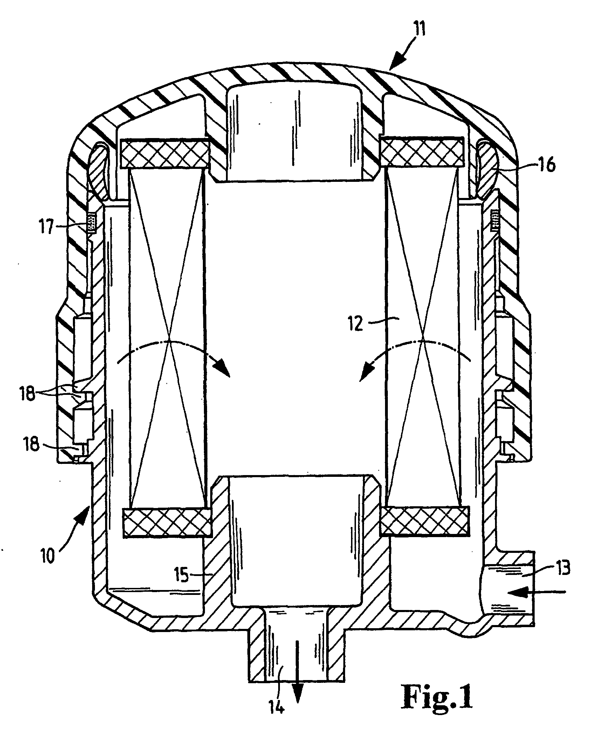

In Figur 1 ist ein Flüssigkeitsfilter für das Schmieröl einer Brennkraftmaschine im Schnitt dargestellt. Dieser besteht aus einem Gehäuse 10, welches durch einen Deckel 11 verschlossen ist. Im Gehäuse ist eine Filterpatrone 12 eingebaut, die von außen nach innen durchströmt wird. Der Fluidfluß im Gehäuse ist durch Pfeile angedeutet. Dieses strömt von einem Einlass 13 durch die Filterpatrone zu einem Auslass 14, der als Stutzen 15 ausgebildet ist und auf den die Filterpatrone gesteckt ist.

Die Filterpatrone 12 wird durch den aufgeschraubten Deckel 11 gehalten und gedichtet. Dieser ist gegenüber dem Gehäuse durch eine als Formdichtung ausgeführte und axial und radialwirkende Dichtung 16 abgedichtet. Zusätzlich ist ein O-Ring als Abstreifring 17 im Spalt zwischen Gehäuse 10 und Deckel 11 untergebracht. Der Deckel wird durch Strukturen 18 auf dem Gehäuse fixiert, wobei diese Strukturen sowohl am Gehäuse wie auch am Deckel angebracht sind und eine gewindeähnliche Gestalt aufweisen. Diese Strukturen werden anhand der folgenden Detailzeichnungen genauer erläutert.

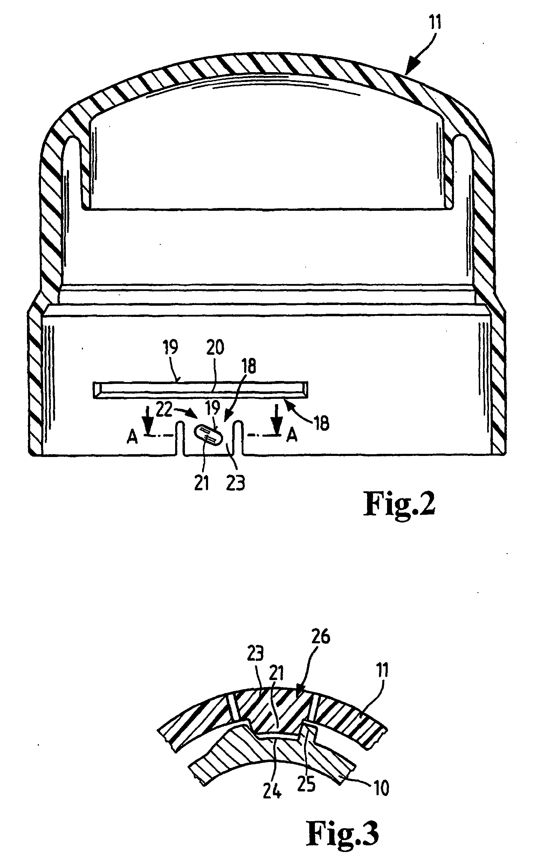

In Figur 2 ist der Deckel 11 gem. Figur 1 alleine dargestellt. Die Strukturen 18 im Deckel 11 bilden Wirkflächen 19, die das Zusammenspiel mit den Strukturen im Gehäuse ermöglichen und so eine Fixierung sowie zuverlässige Abdichtung des Deckels am Gehäuse ermöglichen. Die Strukturen 18 im Deckel bestehen aus einem Gewindeabschnitt 20 und einer Schnappnase 21. Schnappnase und Gewindeabschnitt bilden einen Zwischenraum 22, in dem die Strukturen des Gehäuses verlaufen, so dass durch den Gewindeabschnitt 20 und die Schnappnase 21 eine gabelartige Führung um die Strukturen 9 im Gehäuse gewährleistet ist. Die Schnappnase hat weiterhin die Aufgabe, eine Verrastung zwischen Deckel 11 und Gehäuse 10 im Montagezustand des Deckels zu erzeugen.

Der Schnitt A-A in Figur 2 ist in Figur 3 dargestellt. Die Schnappnase 21 ist auf einer elastischen Zunge 23 angebracht, die während des Einrastens der Schnappnase in einer Aufnahme 24 am Gehäuse 10 elastisch zurückfedern kann. Die Aufnahme 24 bildet gleichzeitig einen Anschlag 25, der die Drehbewegung des Deckels 11 bei der Montage begrenzt. Aufnahme 24 und Schnappnase 21 bilden auf diese Weise eine Schnappverbindung 26, in die der Anschlag 25 integriert ist.

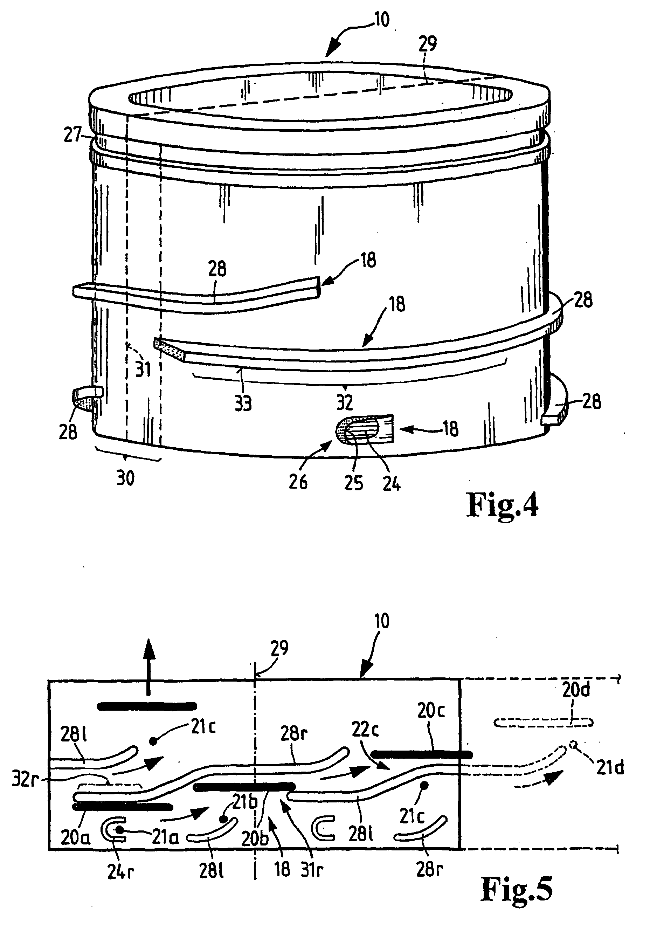

In Figur 4 ist der obere Teil des Gehäuses perspektivisch dargestellt. Zu erkennen ist eine Nut 27 zur Aufnahme des hier nicht dargestellten Abstreifringes 17 und die schon beschriebene Aufnahme 24 mit dem Anschlag 25. Die Aufnahme 24 bildet zusammen mit einem Gewindelauf 28 die Strukturen 18 am Gehäuse 10. Um den Gewindelauf hinterschneidungsfrei auszuführen, muss eine Formteilungsebene 29 beachtet werden. Die beiden Außenteile der Form, die nicht dargestellt sind, werden senkrecht zur Formteilungsebene vom gegossenen Gehäuse wegbewegt. Um Hinterschneidungen zu vermeiden, müssen die Strukturen zumindest in einem Bereich 30, der an die Formteilungsebene 29 angrenzt, senkrecht zu dieser verlaufen. Ein solcher waagerechter Verlauf ist bei dem oberen Teil des Gewindelaufes 28 erkennbar. Im unteren Teil ist eine Unterbrechung 31 des Gewindelaufes 28 vorgesehen, welche in den Bereich 30 hineinläuft und dadurch einen Gewindeteil ausspart.

Der Gewindelauf weist innerhalb einer Montagezone 32 einen weiteren waagerechten Bereich auf, der keine Bedeutung für eine hinterschneidungsfreie Herstellung des Gehäuses hat, sondern mit dem ebenfalls waagerecht angeordneten Gewindeabschnitts 20 im montierten Zustand zusammenwirkt. Dies geschieht über eine Wirkfläche 33, die direkt mit der Wirkfläche 19 des Deckels kommuniziert. Die waagerechte Ausrichtung dieser Wirkflächen verhindert, dass der auf den Deckel wirkende Druck in ein Lösemoment für den Deckel umgewandelt werden kann. Dadurch wird in der bereits beschriebenen Weise ein Auftakten des Deckels durch pulsierende Druckbeanspruchung verhindert. Daher genügt die Haltekraft der Schnappverbindung 26, um selbsttätiges Lösen des Deckels zuverlässig zu verhindern. Zusätzlich wird durch die verspannte Dichtung 16, welche an Gehäuse und Deckel anliegt, ein Widerstand gegen das Lösen des Deckels erzeugt.

In Figur 5 ist das Zusammenwirken der Strukturen 18 im Deckel (schwarz eingezeichnet) und der Strukturen am Gehäuse (weiß eingezeichnet) in einer Abwicklung der Mantelfläche des Gehäuses 10 dargestellt. Als Bezug ist die Formteilungsebene 29 eingezeichnet, welche Senkrecht auf der Abwicklung steht. Gewindeabschnitt 20 a-d und Schnappnase 21 a-d sind in verschiedenen Positionen während der Demontage des Deckels dargestellt, wobei die Demontagebewegung durch Pfeile angedeutet ist. Um den Demontageverlauf zusammenhängend darzustellen, ist die Abwicklung gestrichelt in eine Richtung erweitert, wobei die dort abgebildeten Strukturen denjenigen am gegenüberliegendem Ende der Abwicklung entsprechen. Ganz links ist der Montagezustand des Deckels dargestellt, wobei sich der Gewindeabschnitt 20a an der Montagezone 32r des Gewindelaufes 28r befindet. Dabei ist die Schnappnase 21a in der Aufnahme 24r fixiert.

Durch Drehen des Deckels wird dieser in der Position b von der Axialdichtung abgehoben. Dies geschieht dadurch, dass die Schnappnase 21b am Anfang des Gewindelaufes 28l zwangsgeführt wird. Dabei wird der Gewindeabschnitt 20b schon in den Zwischenraum zwischen den Gewindeläufen 28r und 28l geschoben. Auf diese Weise wird die Unterbrechung 31r im Gewindelauf 28l überbrückt, so dass der Deckel durch diese Unterbrechung nicht wieder in die Montagelage rutschen kann.

Durch weitere Drehung wird der Deckel weiter angehoben, wie der Zustand c zeigt. Hier wird insbesondere die gabelartige Führung des Deckels durch den Gewindeabschnitt 20c und die Schnappnase 21c deutlich, in deren Zwischenraum 22c der Gewindelauf 28l zwangsgeführt ist. Diese Zwangsführung endet mit dem Ende des Gewindelaufes 28l in der Stellung d des Deckels, wo die Schnappnase 21d am Ende des Gewindelaufes 28l axial ausgehoben werden kann. Dadurch kann der Deckel vom Gehäuse 10 abgenommen werden.

Die Gewindeläufe 28r und 28l sind identisch ausgeführt und um 180° verschoben am Deckel angebracht. Genauso befinden sich am Deckel zwei Gewindeabschnitte und Schnappnasen, weiche ebenfalls um 180° ,verschoben angeordnet sind. Allerdings ist in Figur 5 nur einer der Gewindeabschnitte und Schnappnasen dargestellt, um eine bessere Übersichtlichkeit zu gewährleisten. Bei den Gewindeabschnitten und Schnappnasen a, b, c und d handelt es sich jeweils um dasselbe Bauteil, welches lediglich in unterschiedlichen Ausbaupositionen dargestellt ist.

Durch die Gestaltung der Strukturen 18 gem. Figur 5 wird gewährleistet, dass der Deckel eine Drehung um ungefähr 360° vollziehen muss, bevor dieser vom Gehäuse abgenommen werden kann. Der dadurch entstehende Zeitbedarf bei der Demontage des Deckels verschafft dem restlichen Schmieröl im Gehäuse die Zeit, durch einen Ölablauf oder den Auslas 14 abzulaufen. Dadurch ist nach dem Öffnen des Deckels die Filterpatrone weitgehend von Ölrückständen befreit, so dass ein tropffreier Ausbau möglich ist. Der beschriebene Gewindelauf kann auch mehrmals hintereinander geschaltet werden. Damit ergibt sich ein größerer Verdrehwinkel als 306° bis zur Öffnung. Der Deckel wird aber entsprechend länger.

## Patentansprüche

1. Flüssigkeitsfilter mit einem in Urformtechnik hergestellten Gehäuse (10) aus Metall, in das eine durchströmbare Filterpatrone (12) derart eingebaut ist, dass sie einen Einlass (13) und einen Auslass (14) dichtend voneinander trennt und das einen Deckel (11) aufweist, der durch eine Drehung relativ zum Gehäuse mit diesem dichtend verbindbar ist, **dadurch gekennzeichnet, dass** Wirkflächen (33) am Gehäuse (10) angebracht sind, die mit Wirkflächen (19) am Deckel in Verbindung stehen und am Gehäuses derart verlaufen, dass die, die Wirkflächen bildenden Strukturen (18) hinterschneidungsfrei bezüglich der Entformungsrichtung von Formteilen für das Gehäuse sind, wobei die miteinander in Verbindung stehenden Wirkflächen die Halterung des Deckels (11) auf dem Gehäuse (10) bewirken und wobei die Strukturen (18) im Bereich der Formteilung genau in Entformungsrichtung verlaufen, und wobei die Wirkflächen (33) am Gehäuse ausschließlich in Urformtechnik hergestellt sind.

2. Flüssigkeitsfilter nach Anspruch 1, **dadurch gekennzeichnet, dass** zur Abdichtung zwischen Deckel (11) und Gehäuse (10) eine zumindest teilweise axial wirkende Dichtung (16) vorgesehen ist.

3. Flüssigkeitsfilter nach einem der vorherigen Ansprüche, **dadurch gekennzeichnet, dass** zwischen Gehäuse (10) und Deckel (11) ein radial dichtender Abstreifring (17) untergebracht ist.

4. Flüssigkeitsfilter nach einem der vorherigen Ansprüche, **dadurch gekennzeichnet, dass** die Wirkflächen (19,33) in dem Bereich, in dem im montierten Zustand des Deckels (11) auf dem Gehäuse (10) die Strukturen (18), die die Wirkflächen bilden, in Kontakt stehen, zumindest teilweise senkrecht zur Demontagerichtung des Deckels ausgerichtet sind.

5. Flüssigkeitsfilter nach einem der vorherigen Ansprüche, **dadurch gekennzeichnet, dass** die Strukturen (18), die die Wirkflächen bilden, einen Anschlag (25) aufweisen, der die Montagebewegung des Deckels (11) am Gehäuse (10) begrenzt.

6. Flüssigkeitsfilter nach einem der vorherigen Ansprüche, **dadurch gekennzeichnet, dass** die Strukturen (18), die die Wirkflächen bilden, eine Rastoder Schnappverbindung (26) aufweisen, die zwischen dem montierten Deckel (11) und dem Gehäuse (10) eingerastet ist.

7. Flüssigkeitsfilter nach einem der vorherigen Ansprüche, **dadurch gekennzeichnet, dass** durch die Gestalt der Strukturen (18), die die Wirkflächen bilden, zur Demontage des Deckels (11) von dem Gehäuse (10) eine Zwangsführung bilden, so dass eine Drehung des Deckels um einen Winkel von größer als 180° notwendig ist.

8. Flüssigkeitsfilter nach Anspruch 7, **dadurch gekennzeichnet, dass** die Wirkflächen (19,33) von gewindeähnlichen Strukturen gebildet werden.

9. Verfahren zur Herstellung eines Flüssigkeitsfilters gemäß einem der vorangehenden Ansprüche mit einem Gehäuse (10), in welches eine durchströmbare Filterpatrone (12) derart eingebaut werden kann, dass sie einen Einlass (13) und einen Auslass (14) dichtend voneinander trennt und welches hierzu einen Deckel (11) aufweist, der durch eine Drehung relativ zum Gehäuse mir diesem dichtend verbunden wird, **dadurch gekennzeichnet, dass** Wirkflächen (33) am Gehäuse zur Erzeugung der dichtenden Verbindung mit dem Deckel (11) ausschließlich im Urformtechnik hergestellt werden.

10. Verfahren nach Anspruch 9, **dadurch gekennzeichnet, dass** auch die Wirkflächen (19) am Deckel (11) zur Erzeugung der dichtenden Verbindung mit dem Gehäuse (10) ausschließlich im Urformtechnik hergestellt werden.

## Claims

1. Liquid filter, having a housing (10) which is formed from metal and is produced by a master moulding technique, in which housing a traversible filter cartridge (12) is installed in such a manner that it sealingly separates an inlet (13) and an outlet (14) from each other, and said housing includes a cover (11) which is sealingly connectable to the housing by rotation relative to said housing, **characterised in that** working surfaces (33) are provided on the housing (10), which surfaces communicate with working surfaces (19) on the cover and extend on the housing in such a manner that the structures (18), which form the working surfaces, are free of recesses in the direction in which moulded parts for the housing are removed from the mould, the interconnecting working surfaces causing the cover (11) to be retained on the housing (10), and the structures (18) in the region of the parting extending exactly in the mould-releasing direction, and the working surfaces (33) on the housing being produced exclusively by a master moulding technique.

2. Liquid filter according to claim 1, **characterised in that** a seal (16), which acts at least partially axially, is provided to establish the seal between the cover (11) and housing (10).

3. Liquid filter according to one of the previous claims, **characterised in that** a radially sealing scraper ring (17) is accommodated between the housing (10) and cover (11).

4. Liquid filter according to one of the previous claims, **characterised in that** the working surfaces (19,33) are orientated at least partially perpendicularly relative to the dismounting direction of the cover in the region in which, when the cover (11) is in its mounted state on the housing (10), the structures (18) forming the working surfaces are in contact with one another.

5. Liquid filter according to one of the previous claims, **characterised in that** the structures (18), which form the working surfaces, have a stop member (25) which limits the mounting movement of the cover (11) on the housing (10).

6. Liquid filter according to one of the previous claims, **characterised in that** the structures (18), which form the working surfaces, have a locking or snap-fitting connection (26) which is locked in position between the mounted cover (11) and the housing (10).

7. Liquid filter according to one of the previous claims, **characterised in that**, because of the configuration of the structures (18), which form the working surfaces, a positive guidance is formed to dismount the cover (11) from the housing (10), so that it is necessary to rotate the cover through an angle greater than 180°.

8. Liquid filter according to claim 7, **characterised in that** the working surfaces (19,33) are formed by thread-like structures.

9. Method of producing a liquid filter according to one of the preceding claims, said filter having a housing (10), in which a traversible filter cartridge (12) can be installed in such a manner that it sealingly separates an inlet (13) and an outlet (14) from each other, and said housing also has a cover (11) which is sealingly connected to the housing by rotation relative to said housing, **characterised in that** working surfaces (33) on the housing are produced exclusively by a master moulding technique to establish the sealing connection with the cover (11).

10. Method according to claim 9, **characterised in that** the working faces (19) on the cover (11) are also produced exclusively by a master moulding technique to establish the sealing connection with the housing (10).

## Revendications

1. Filtre à liquide comportant un boîtier (10) en métal fabriqué par la technique de transformation primaire, recevant une cartouche de filtre (12) destinée à être traversée par le liquide, séparant de manière étanche une entrée (13) d'une sortie (14) et ayant un couvercle (11) qui se relie de manière étanche au boîtier par une rotation par rapport à celui-ci,
**caractérisé en ce que**
le boîtier (10) comporte des surfaces actives (33) qui coopèrent avec des surfaces actives (19) du couvercle et sont dirigées par rapport au boîtier de façon que les structures (18), qui constituent les surfaces actives, soient sans contre-dépouille par rapport à la direction de démoulage des pièces moulées pour le boîtier,
les surfaces actives qui coopèrent assurent la fixation du couvercle (11) sur le boîtier (10) et les structures (18) sont dirigées exactement dans la direction de démoulage au niveau de la division du moule,
les surfaces actives (33) du boîtier étant exclusivement réalisées par technique de transformation primaire.

2. Filtre à liquide selon la revendication 1,
**caractérisé par**
au moins un joint (16) à effet axial au moins en partie pour assurer l'étanchéité entre le couvercle (11) et le boîtier (10).

3. Filtre à liquide selon l'une des revendications précédentes,
**caractérisé par**
un joint racleur (17) d'étanchéité radiale prévu entre le boîtier (10) et le couvercle (11).

4. Filtre à liquide selon l'une des revendications précédentes,
**caractérisé en ce que**
dans la zone dans laquelle à l'état monté du couvercle (11) sur le boîtier (10), les structures (18) qui forment les surfaces actives sont en contact, les surfaces actives (19, 33) sont au moins en partie perpendiculaires à la direction de démontage du couvercle.

5. Filtre à liquide selon l'une des revendications précédentes,
**caractérisé en ce que**
les structures (18) qui forment les surfaces actives ont une butée (25) qui limite le mouvement de montage du couvercle (11) sur le boîtier (10).

6. Filtre à liquide selon l'une des revendications précédentes,
**caractérisé en ce que**
les structures (18) qui forment les surfaces actives comportent une liaison d'encliquetage ou d'enclipsage (26) qui s'accroche entre le couvercle (11) à l'état monté et le boîtier (10).

7. Filtre à liquide selon l'une des revendications précédentes,
**caractérisé en ce que**
la forme des structures (18) constituant les surfaces actives forme un guidage forcé pour le démontage du couvercle (11) par rapport au boîtier (10) pour nécessiter une rotation du couvercle d'un angle supérieur à 180°.

8. Filtre à liquide selon la revendication 7,
**caractérisé en ce que**
les surfaces actives (19, 33) sont formées par des structures analogues à un filetage.

9. Procédé de fabrication d'un filtre à liquide selon l'une des revendications précédentes comportant un boîtier (10) recevant une cartouche de filtre (12) traversée par le liquide pour séparer de manière étanche une entrée (13) et une sortie (14) et ce boîtier comporte à cet effet un couvercle (11) relié de manière étanche au boîtier par une rotation relative par rapport à celui-ci,
**caractérisé en ce que**
les surfaces actives (33) du boîtier créant la liaison étanche avec le couvercle (11) sont fabriquées exclusivement par la technique de transformation primaire.

10. Procédé selon la revendication 9,
**caractérisé en ce que**
les surfaces actives (19) du couvercle (11) pour réaliser la liaison étanche avec le boîtier (10) sont fabriquées uniquement par une technique de transformation primaire.
